# EUROPEAN PATENT APPLICATION

(11) **EP 1 557 401 A1**
(43) Date of publication of application: **27.07.2005**
(21) Application number: 05075142.9
(22) Date of filing: 21.01.2005
(51) Int. Cl.: C04B 7/52, C04B 11/00, B30B 11/18, B28B 3/14, B01J 2/22

(54) **The coarsening of plaster of Paris**

(30) Priority: 24.01.2004 GB 0401574
(71) Applicant: Imperial Chemical Industries Plc., London W1U 4AN (GB)
(72) Inventor: Charnok, Ronald Scott, Blunham Bedfordshire MK44 3ND (GB); Deamer, Derrick Frederick, Royston Hertfordshire SG8 7EF (GB); Hearn, Michelle, Hazlemere Buchinghamsire HP15 7EA (GB)
(74) Representative: Cooper, Alan Victor

(57) **Abstract**

A method for coarsening fine particles (eg below 300µm) plaster of Paris (calcium sulphate hemihydrate) by converting the particles into an elongated compacted form (9) and then subjecting the form to a breaking force (preferably a mechanical breaking force such as a crushing, hammering or cutting force) whereupon the form breaks into angular agglomerates. Also coarsened plaster of Paris comprising angular agglomerates of compacted fine particles of the plaster where preferably the agglomerates have a particle size of from 0.5 to 5mm. The compaction of the powder enables it to pour easily and with minimal dust whilst remaining capable of a quick manual dispersion in water.

## Description

This invention relates to a method for the coarsening of plaster of Paris and to coarse plaster of Paris which can be made by the method and yet which remains quickly dispersible in water. Plaster of Paris is the common name for calcium sulphate hemihydrate or CaSO₄.½ H₂O, also known as casting plaster.

Water hardens plaster of Paris by hydrating it from the hemihydrate to the dihydrate which is gypsum, ie. CaSO₄.2H₂O. The hydration is accompanied by a small expansion which enables plaster of Paris to find use in aqueous moulding and filler compositions, sometimes called "hydraulic setting pastes". More specifically, moulding compositions may be pastes or slurries of plaster and water, whilst filler compositions are usually pastes. Slurries may also be used to impregnate cloth so that when the plaster hardens, a rigid structure is created as is the case when plaster of Paris is used to make splints for broken bones.

Such uses of plaster of Paris require the efficient and preferably quick dispersion of particles of plaster in water in a way which ensures that the particles are thoroughly wetted and which can preferably be performed within about 2 to 3 minutes. The dispersion is often performed by hand and (at least in the case of fillers) by unskilled users such as DIY (do-it-yourself) householders. Efficient dispersion in such circumstances demands the use of fine particles preferably small enough to pass through a 100µm sieve, where 1 µm equals 1 x 10⁻⁶m. Unfortunately, the delivery of particles of this fineness from a packet to the water into which they are to be dispersed can create various problems especially for unskilled users. Firstly, fine particles of plaster of Paris have a poor ability to flow and so they (and dry precursor mixtures containing them) do not pour easily from a packet. This often leads the user to tap the packet or to use a spoon. Tapping the packet creates dust and often causes a sudden delivery of a large volume of plaster into the water. Spooning will also deliver a large volume in a single amount. Such large volumes of plaster will have a relatively low ratio of easily accessible surface area to volume of plaster which means that the wetting of the plaster will be very inefficient. As a result, the plaster will clump into large unpredictably sized masses often containing loose agglomerates of unwet particles which can be upwards of 10 millimetres in diameter.

Large unpredictably sized masses formed by clumping need to be broken down during the subsequent dispersion of the plaster into the water for if they survive into the final paste or slurry, they will be a source of defects in the surface of the hardened plaster. For example, they will form blemishes in the surface of a plaster caste or in a surface formed by a hardened filler composition which has been applied by a filling knife or trowel into a hole or crack in a wall or ceiling. The breaking down of the large masses demands the exertion of significant shear which is difficult and tiring to apply when dispersing by hand. Many DIY users do not have the sustained strength or patience to achieve a sufficient break down and so they become dissatisfied with the surfaces they achieve.

Clearly it would be desirable to coarsen fine particulate plaster of Paris so as to improve its flow but without inhibiting its ability to be etted by water. Attempts have been made to do this by the use of water soluble binder additives to coarsen the plaster but the time needed for them to dissolve increases unacceptably the time needed to disperse the plaster in water. Their use may also inhibit the ability of the plaster to harden.

European Patent Application EP 0 968 976A (published in January 2000) describes an attempt to coarsen fine particles of plaster of Paris by causing them to agglomerate in a controlled way by agitation in the presence of an organic polar liquid having an ability to form hydrogen bonds, eg. n-propanol. The polar liquid causes the fine particles to interlink loosely and form uniformly sized spherical agglomerates of pre-determinable size which on mixing by hand into water disrupt easily because of the looseness of their agglomeration and they gave a smooth paste within 2 to 3 minutes. However the looseness of the agglomeration allows the formation of unacceptable amounts of dust when the agglomerates are being poured from a packet. In addition, the spherical shape of the agglomerates meant that they had the minimum surface area possible for a given volume of plaster and in practice it was found that their average diameter could not exceed 1mm if their surface area was to be large enough to permit dispersion in water within 2 to 3 minutes. A further disadvantage is that conventional plant for handling plaster of Paris is not able to cope with the introduction of the volatile and inflammable organic polar liquids needed to cause the agglomeration, so unconventional procedures were needed which are complex, difficult to control and therefore expensive.

One of the objects of this invention is to provide a method for coarsening plaster of Paris which does not require the use of organic polar liquids and which produces angular non-spherical relatively predictably sized agglomerates of fine particles of the plaster which can be relatively large but which are nevertheless efficiently dispersible in water by simple manual stirring.

Accordingly, this invention provides a method for coarsening particulate plaster of Paris wherein particles of the plaster (preferably fine particles capable of passing through a 300µm sieve) are converted into an elongated compacted form (preferably a sheet form usually of thickness from 0.3 to 5mm) and then the compacted form is subjected to a breaking force whereupon it fractures into angular agglomerates. This invention also provides coarse plaster of Paris plaster comprising agglomerates of particles of the plaster wherein the agglomerates have an angular shape and are preferably capable of passing through a 5mm sieve and/or capable of being retained by a 0.5mm sieve. The compaction of the plaster particles enables the plaster to flow easily when being poured from a packet and minimises the creation of dust. However, despite its compaction, the plaster can still be dispersed efficiently in water with manual stirring probably as a result of the increased surface area arising from the angular shape of the agglomerates. Usually, dispersion is quick, for example within 2 to 3 minutes.

Calcium sulphate hemihydrate is commercially available as plaster of Paris comprising particles capable of passing through a 300µm sieve and capable of being retained by a 20µm sieve. The preferred starting material for use in this invention is the so-called "fine casting plaster" which can pass through a 100µm sieve.

Conversion to a compacted form may be achieved by a variety of compacting forces including those imparted when the particles are delivered to the nip of counter rotating rollers. Delivery to the nip may be by means of a rotating screw which preferably subjects the particles to a preliminary compression of from 2 500 to 9000 kilopascal (k.pa) and preferably 3 000 to 7 500 k.pa. Compaction is assisted by conducting the delivery under a sub-atmospheric pressure, preferably a pressure of from 0.1 to 0.75 bar so as to reduce the amount of air trapped in the volume of fine particulate plaster.

On leaving the rollers, the compacted form is subjected to a breaking force imparted by for example by mechanical means such as crushers or rotating blades or especially by impact, for example from hammers. It is found that the force comminutes the compacted form into agglomerates of particles of plaster which flow well without creating dust and which can be dispersed in water by manual stirring. The comminution is facilitated if at least one of the cylindrical surfaces of the counter-rotating rollers is provided with axial ribs and if both are so provided, the ribs will preferably intermesh when they come together in the nip. The axial ribs corrugate the compacted form and the corrugation facilitates the comminution. A similar facilitation can be achieved if the compacted form is corrugated longitudinally and in the extreme, the longitudinal corrugations may be separate from each other giving a plurality of distinct strands of compacted material. Longitudinal corrugations can be formed by circumferential ribs on one or both of the rollers.

The compacted form is most preferably from 0.5 to 2mm thick (especially if corrugated) because this has been found to give a high yield (eg. up to 40 weight %) of agglomerates which can pass through a 2mm sieve and which have been found to give smoother pastes of plaster of Paris and water. If, however, despite the use of a compacted form of a thickness of not more than 2mm, there are still significant numbers of agglomerates which are too large to pass through a 2mm sieve, it will be preferred to remove these by sieving in order to achieve very smooth pastes. It is also preferred to sieve to remove any agglomerates having a maximum dimension of below 100µm and any uncompacted fine particles so as to reduce dust formation on pouring. Both oversized and undersized materials are preferably re-cycled by re-delivery to the nip.

Before or after compaction, the particles of plaster of Paris may be dry blended with auxiliary additives to create a pre-cursor mixture. Blending particulate auxiliary additives after compaction usually requires less energy to achieve a homogenous pre-cursor mixture. Typical auxiliary additives include:
a) a thickener/binder, preferably up to 3wt%,
b) a retarder, preferably up to 1wt%,
c) a humectant, preferably up to 1wt%,
d) an effervescer, preferably up to 1wt%,
e) an adhesion promoter, preferably up to 1wt%,
f) an extender, preferably up to 25wt%,
g) a setting time accelerator, preferably up to 1wt% and
h) a permanent colorant, where the amount is dependent on the depth of colour required in the dried product.
The weight percentages quoted in (a) to (g) above are based on the total weight of the dry precursor mixture.

Thickeners are used to increase the viscosity of an aqueous composition of the mixture in order to make it easier for application by unskilled users. Binders serve a similar function. Thickeners or binders are usually compounds which interact with water molecules to form micellar structures. Examples include celluloses such as hydroxypropylmethyl cellulose or methylhydroxyethyl cellulose or "so-called" water-soluble oxidised starches, starch ethers or starches pre-gelatinised by heat treatment.

Retarders serve to extend the hydration time of plaster of Paris from around 5 to 15 minutes (depending on the source of the plaster) to about an hour which allows extra time for unskilled users to apply the compositions. Typical retarders are tannic acid, tartaric acid and combinations of sodium tripolyphosphate and citric acid which make sodium citrate in situ.

Humectants are additives which help to retain water which is helpful to the application of the composition by unskilled users to permeable surfaces which draw water from the composition and make it less workable. Typical humectants are hydroxypropyl guar gum ethers and also the cellulose ethers mentioned above.

Effervescers assist in disrupting the agglomerates and so shorten the time needed for stirring. They usually comprise a combination of a metal carbonate or bicarbonate and an organic acid. Examples include sodium or calcium carbonates or sodium bicarbonate used with citric or tartaric acids.

Adhesion promoters assist the ability of the hardened composition to stick to surfaces which are not completely sound often due to unskilled preparation. The most frequently used promoters are polyvinyl alcohol and polyvinyl acetate.

Extenders are sometimes used to help to disperse the particles of plaster into water. They include calcite, talc, chalk and clays, particularly attapulcite clay.

Setting time accelerators such as gypsum (CaSO₄.2H₂O.) are used in combination with a retarder to offset the unpredictable consequences of unskilled users employing incompetently cleaned application tools such as filling knives or trowels with residues of hardened plaster remaining on them from previous jobs.

Colorants may be added if the dried plaster is required to have a permanently different colour.

This invention further provides a method for making an aqueous composition containing plaster of Paris and water wherein agglomerates as made or described above or a dry precursor mixture are stirred manually into water using a stirrer.

Preferred apparatus for use in the method of this invention, one possible angular agglomerate and a compacted form will now be described with reference to the drawings of which
- Figure 1: is a diagrammatic representation of the apparatus and
- Figure 2: is a perspective view of a possible angular agglomerate.

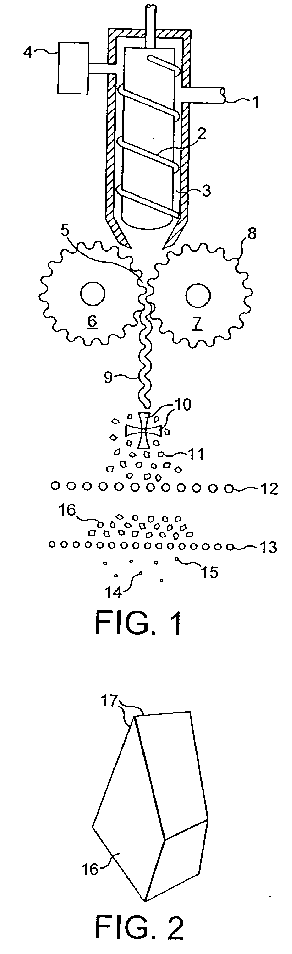

Figure 1 shows an inlet pipe 1 through which fme particles of plaster of Paris (not shown) can be fed by a conveyor screw (not shown) to delivery screw 2 located within chamber 3 maintained at sub-atmospheric pressure by vacuum pump 4. Screw 2 compresses the fine particles of plaster of Paris and delivers them under quasi hydraulic pressure to nip 5 of a pair of counter-rotating rollers 6 and 7 shown on an exaggerated scale for clarity. The circumferential surfaces of rollers 6 and 7 are each provided with axially extending ribs 8 which intermesh as they come together in nip 5 as to compact the fine particles delivered from screw 2 into an elongated corrugated compacted sheet 9 which subsequently issues from between rollers 6 and 7. Sheet 9 then travels into range of rotating hammers 10 which impact on sheet 9 and comminute it into agglomerates 11. Agglomerates 11 are passed through sieve 12 to remove those which are oversized and then are presented to sieve 13 which allows undersized agglomerates 14 and uncompacted fine plaster particles 15 to pass whilst retaining agglomerates 16 of the required size to be recovered from sieve 13. Oversized agglomerates and undersized agglomerates 14 plus uncompacted fine plaster particles 15 are then re-cycled to inlet port 1 for re-delivery to nip 5.

Figure 2 shows a typical angular agglomerate 16 having angular edges 17 which cause agglomerate 16 to have a greater surface area relative to a spherical agglomerate containing the same volume of plaster.

The invention is further illustrated by the following Example.

### EXAMPLE

The fine particle plaster of Paris chosen for use in this Example was a blend of white fine casting plasters of which one was "Keramod" A20 sold by Sudharzer Gipswerk GmbH of Ellrich, Germany and the other was "Primoplast" sold by Hilliges Gipswerk GmbH of Osterode am Harz, Germany. The fine particles were capable of passing through a 100µm sieve. The blend was mixed with the following particulate auxiliary additives:

| Additive | *Wt% |
|---|---|
| Calcium Sulphate dihydrate setting time accelerater | 0.15 |
| Citric acid retarder | 0.05 |
| Water Softener/neutaliser for the citric acid | 0.10 |
| Thickener | 0.60 |

| | |
|---|---|
| *Weight percent is a percentage of the total weight of the mixture. | |

The particles of plaster and additive were fed via a conveyor screw to a delivery screw located in a chamber as shown in Figure 1. The chamber was maintained at a sub-atmospheric pressure of 0.68 bar. The delivery screw was rotated at 180 rpm to impart a pressure of 5 520 k.pa to the particles which it was delivering. The particles were delivered to the nip of a pair of counter-rotating axially ribbed rollers rotating at a speed of 10.4 rpm and spaced so as to compact the particles into a corrugated sheet form which was 2 mm thick. The sheet contained occasional random holes.

The sheet was then moved into range of a rotating hammer which comminuted it into angular agglomerates which were found to be firmly compacted particles of plaster of which most could pass through a 2mm sieve. However, the agglomerates were passed through a 2 mm sieve to remove the few which were oversized, whilst those which were undersized together with uncompacted fine particles were removed by allowing them to escape through a 500µm sieve. The presence of the random holes aided comminution.

The agglomerates were collected from the upper surface of the 500µm sieve and, not surprisingly, they were found to have a size of from 500µm to 2 mm. They flowed easily when poured and could be dispersed in water within 3 minutes by gentle manual stirring. They were firmly compacted to the extent that when contained in a half full lidded jar and shaken and the lid was removed immediately after shaking, no dust could be seen rising from the jar. In contrast, when a conventional fine plaster was similarly shaken and the lid removed, a clearly visible dust cloud rose from the mouth of the jar.

## Claims

1. A method for coarsening particulate plaster of Paris wherein particles of the plaster are converted to a compacted form (9) and then the form is subjected to a breaking force whereupon it fractures into angular agglomerates.

2. A method according to Claim 1 wherein compaction is performed by counter-rotating rollers (6 and 7).

3. A method according to Claim 2 wherein the circumferential surface of at least one of the rollers is provided with axially extending ribs (8).

4. A method according to any one of the preceding Claims wherein particulate plaster is compressed prior to its arrival at the place (5) where it is subjected to the compaction which converts it into the compacted form.

5. A method according to any one of the preceding Claims wherein the particulate plaster is subjected to sub-atmospheric pressure prior to its compaction.

6. Coarse plaster of Paris comprising agglomerates (16) of particles of the plaster wherein the agglomerates have an angular shape.

7. Coarse plaster of Paris according to Claim 6 wherein the agglomerates also contain one or more auxiliary additives selected from thickeners, binders, retarders, humectants, effervescers, adhesion promoters, extenders and buffers.

8. Coarse plaster of Paris according to Claim 6 or Claim 7 wherein the agglomerates are capable of retention by a 0.5mm sieve.

9. Coarse plaster of Paris as claimed in any one of Claims 6 to 9 wherein the agglomerates are capable of passing through a 2 mm sieve.

10. A method for making an aqueous composition containing plaster of Paris and water wherein agglomerates as claimed in any one of Claims 6 to 9 or made by a process as claimed in any one of Claims 1 to 5 stirred manually into water using a stirrer.
